**Europäisches Patentamt**

**European Patent Office**

**Office européen des brevets**

(11) Publication number: **0 006 421**
**A2**

# EUROPEAN PATENT APPLICATION

(21) Application number: 79100933.5

(51) Int Cl.³ **C 08 F 10/00**, C 08 F 6/24

(22) Date of filing: 28.03.79

(30) Priority: 29.06.78 JP 79382/78
30.11.78 JP 149245/78

(43) Date of publication of application: 09.01.80
Bulletin 80/1

(84) Designated Contracting States: BE DE FR GB IT NL

(71) Applicant: SUMITOMO CHEMICAL COMPANY
LIMITED, 15 Kitahama 5-chome Higashi-ku, Osaka (JP)

(72) Inventor: Saito, Shinichi, 9, Yushudai Nishi 1-chome,
Ichihara-shi Chiba-ken (JP)
Inventor: Aikawa, Kazuo, 9, Yushudai Nishi 1-chome,
Ichihara-shi Chiba-ken (JP)
Inventor: Orino, Michio, 135, Iriyamazu, Ichihara-shi
Chiba-ken (JP)
Inventor: Aoi, Kazuya, 9, Yushudai Nishi 1-chome,
Ichihara-shi Chiba-ken (JP)
Inventor: Kusakabe, Hideo, 9, Yushudai Nishi 1-chome,
Ichihara-shi Chiba-ken (JP)
Inventor: Katata, Motohiro, 9, Yushudai Nishi 1-chome,
Ichihara-shi Chiba-ken (JP)
Inventor: Yabuuchi, Hiroshi, 10-16, Sakuragaoka 2-
chome, Setagaya-ku Tokyo-to (JP)
Inventor: Kobari, Haruo, 8, Natsumidai 1-chome,
Funabashi-shi Chiba-ken (JP)

(74) Representative: Vossius, Volker, Dr. et al, Vossius,
Vossius, Hiltl, Tauchner Heunemann; Patentanwälte
Siebertstrasse 4 P.O. Box 86 07 67, D-8000
München 86 (DE)

(54) Method for drying polyolefins and apparatus therefor.

(57) Method for drying polyolefins comprising bringing polyolefins having a total content of at least one of hydrocarbons having 1 to 8 carbon atoms and alcohols having 1 to 8 carbon atoms of 100 ppm by weight to 2% by weight into contact with an inert gas (e.g. nitrogen gas having virtually no hydrocarbon and/or no alcohol) in counterflow in a silo type through-flow drying apparatus, particularly a multi-silo type through-flow drying apparatus. Said method gives polyolefins having a total content of the hydrocarbons and/or alcohols of less than 100 ppm by weight with lower energy consumption.

EP 0 006 421 A2

VOSSIUS · VOSSIUS · HILTL · TAUCHNER · HEUNEMANN
PATENTANWÄLTE

006421

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: P 096 EP
Case: 600091

SUMITOMO CHEMICAL COMPANY, LIMITED
Osaka / Japan

Method for Drying Polyolefins and Apparatus Therefor

Priority:    June      29, 1978, Japan, No. 79382/78
             November 30, 1978, Japan, No. 149245/78

The present invention relates to a method for drying polyolefins and an apparatus suitable therefor. More particularly, it relates to an improved method of drying
polyolefins which is characteristic in that it satisfactorily reduces a concentration of one or more of hydrocarbons having 1 to 8 carbon atoms and alcohols having
1 to 8 carbon atoms which remain in the polyolefins dried
by conventional drying methods, and to an apparatus
suitable for the method.

When polyolefins are produced in a hydrocarbon medium in
the presence of a catalyst containing as one of the components
a compound of a transition metal, such as Ziegler catalyst, they
subjecting them to post-treatments such as deashing, subsequently treating the resulting slurry of the polyolefins in a hydrocarbon with a centrifugal separator to

0006421

separate the slurry into a hydrocarbon phase containing atactic polymers and a polyolefin cake containing a small amount of the hydrocarbon medium, and then drying the cake.

The polyolefin cake containing a hydrocarbon medium has usually been dried in two steps. In the first step, it is dried with a heated nitrogen gas which contains hydrocarbons having 1 to 8 carbon atoms and/or alcohols having 1 to 8 carbon atoms and has a dew point of 50°C, using a drier such as a flush dryer, fluid bed dryer or rotary dryer until the concentration of the hydrocarbons having 1 to 8 carbon atoms and/or the alcohols having 1 to 8 carbon atoms reaches 1 to 2 % by weight, and in the second step, it is dried using the same dryer as in the first step until the concentration of the hydrocarbons and/or alcohols reaches 100 to 2,000 ppm by weight. However, according to the known drying method the polyolefin powder still contains about 100 to 2,000 ppm by weight of hydrocarbons having 1 to 8 carbon atoms and/or alcohols having 1 to 8 carbon atoms owing to the hydrocarbon medium and other agents which are used in the polymerization step and the subsequent treatments, and it is difficult to satisfactorily remove the remaining hydrocarbons and alcohols. Moreover, even to reduce the hydrocarbons to such a level, the nitrogen gas should have a dew point of less than -10°C in the light of the vapor-solid adsorption equilibrium of the hydrocarbons and/or alcohols in the polyolefin phase and the nitrogen gas phase. Besides, since a large amount of nitrogen gas should be used, it is necessary to re-use the gas repeatedly by circulating it in the system to save costs and, therefore, the nitrogen gas should be kept at the desired dew point by cooling and heating alternately with a freezer and a heater respectively, which results in a substantial loss of heat.

The hydrocarbons and/or alcohols remaining in the polyolefin powder are not reduced in the subsequent pelletizing step, and the pellets thus obtained still contain
almost the same amount of hydrocarbons and/or alcohols,
so that when the polyolefin powders containing hydrocarbons and/or alcohols are used for processing, the
final products are inferior in printability, odour,coloring (so-called scorching), and the like.

In order to eliminate these drawbacks in the final products, it is desired to remove the remaining hydrocarbons
and/or alcohols from the polyolefin powders. For this
purpose it has been proposed, as the third step or in
place of the second step in the above known drying method,
to subject the polyolefin powders to drying with nitrogen
gas with forcible agitation by means of a rotatory agitating blade in an agitating drying apparatus (usually
called a "paddle dryer", cf. Chemical Apparatus, 1978,
December, pages 29-37). However, according to this method
it is essential to diffuse the powder well in order to
promote the drying effect, so that a great amount of
power is required for the forcible agitation of the polyolefin powders, and this is disadvantageous from the
standpoint of minimizing energy outlay.

As a result of the present inventors' intensive studies
on an improved method of drying polyolefin powders without using a great amount of energy as does the known drying method, it has been found that the polyolefins can
be dried efficiently by bringing the polyolefin powders
into contact with an inert gas which contains virtually
neither hydrocarbon having 1 to 8 carbon atoms nor alcohol
having 1 to 8 carbon atoms, in counterflow in a silo type
through-flow drying apparatus.

0006421

An object of the present invention is to provide an improved method of drying polyolefins. Another object of the invention is to provide a method for reducing satisfactorily a concentration of hydrocarbons having 1 to 8 carbon atoms and/or alcohols having 1 to 8 carbon atoms which remain in an amount of 100 ppm to 2% by weight in the polyolefins dried by conventional drying methods. A further object of the invention is to provide an apparatus suitable for performing the drying as set out above. These and other objects and advantages of the present invention will be apparent from the following description.

According to the present invention, the polyolefins to be treated are brought into contact in counterflow with an inert gas which virtually contains no hydrocarbon having 1 to 8 carbon atoms and/or no alcohol having 1 to 8 carbon atoms, preferably keeping the temperature of the polyolefins at 50 to 130°C, under the condition that the total concentration of hydrocarbon and/or alcohols in the gaseous phase: Cg (ppm by volume) satisfies the following formula I:

$$Cg \leqq 9 \times 10^2 \cdot Cs^{0.91} \cdot e^{-3100/RT} \qquad I$$

wherein Cs is the total concentration of the hydrocarbons having 1 to 8 carbon atoms and/or alcohols having 1 to 8 carbon atoms which are contained in the polyolefins and are to be removed (ppm by weight), T is an absolute temperature (°K), $e$ is base of natural logarithm, and R is a gas constant: 1.987 (Cal/deg.mol). Contact may usually last from about 0.5 to 20 hours.

Although it has been considered essential to promote the diffusion of the components to be removed by agitation or fluidization of the powders in order to dry the polyolefins, it has now surprisingly been found that a through-flow drying apparatus using a silo can be used effectively, whereby the polyolefins can satisfactorily be dried. The method of the present invention has the advantage that the heat added to the polyolefins in the previous step can be used efficiently and, furthermore, the remaining heat can be used as a preheating energy source in the processing step, resulting in a significant energy saving.

The silo type through-flow drying apparatus used in the present invention is a silo type through-flow drying storage vessel. The storage vessel may be a single tank or may consist of two or more tanks connected in series. When the storage vessel consists of two or more tanks, each tank may be separate, but preferably, all tanks are accommodated in a single storage vessel, i.e. two or more tanks having the same or similar shape and dimensions are accommodated in a single storage vessel (hereinafter, such a vessel containing a plurality of tanks is referred to as "multi-silo type through-flow drying apparatus"). The silo type through-flow drying apparatus used in the present invention has the following shape and dimensions. Its appearance is the same as that of the conventional silo type storage vessel, i.e. a cylindrical storage vessel having a conical substructure, but it is not limited thereto. The vessel has a ratio of 1.0 or more of height to inner diameter (when the main part of the vessel is not cylindrical the inner diameter is calculated by converting the sectional area to a circular area).

The apparatus is provided with a device for introducing polyolefins (usually a cyclone) at its upper part, together with a device for introducing an inert gas at the bottom or side wall, and is further optionally provided with external means of insulation or means of preheating the inert gas. Such an apparatus may be constructed specially for the tank, or else conventional storage vessels usually used for storage of polyolefin powders may be used after modifying them to meet the shape and dimensions desired.

The media remaining in the polyolefins are hydrocarbons having 1 to 8 carbon atoms and/or alcohols having 1 to 8 carbon atoms. The hydrocarbons include saturated or unsaturated aliphatic hydrocarbons having 1 to 8 carbon atoms, e.g. methane, ethane, ethene, propane, propene, n-butane, 1-butene, n-pentane, 1-pentene, n-hexane, methylpentanes, 4-methyl-1-pentene, dimethylbutanes and methylhexanes; alicyclic hydrocarbons having 5 to 8 carbon atoms, e.g. cyclohexane, methylcyclohexane, cycloheptane; and aromatic hydrocarbons having 6 to 8 carbon atoms, such as benzene, toluene and xylene. The alcohols include aliphatic alcohols having 1 to 8 carbon atoms, e.g. methyl alcohol, ethyl alcohol, n-propyl alcohol, isopropyl alcohol, n-butyl alcohol, isobutyl alcohol, n-amyl alcohol, hexyl alcohol, heptyl alcohol, n-octyl alcohol and 2-ethylhexyl alcohol.

The polyolefins charged in the apparatus are at a temperature of 50 to 130°C, preferably 60 to 125°C. When the temperature is lower than 50°C the desired drying effect is not achieved and, on the other hand, when the temperature is over 130°C undesirable fusing of the polyolefins appears.

The inert gas to be introduced into the apparatus can be nitrogen gas, argon gas, etc., but preferably nitrogen gas. The nitrogen gas contains virtually neither hydrocarbon having 1 to 8 carbon atoms nor alcohol having 1 to 8 carbon atoms. Preferred nitrogen gas has a dew point of lower than -20°C. Industrial nitrogen gas usually satisfies these requirements. The inert gas is usually used at a temperature of 20 to 130°C, the amount used varying with the initial concentration of media remaining in the polyolefins and also with the desired final concentration thereof, but the inert gas is usually used in an amount of 20 $Nm^3$ or more, preferably 20 to 150$Nm^3$, per ton of polyolefins to be treated.

The polyolefin powders to be treated are retained in the silo type through-flow drying apparatus for an average of 0.5 to 20 hours. Preferred retention time is in the range of 1 to 10 hours on average.

The polyolefins to be treated include homopolymers and/or copolymers of olefins such as ethylene, propylene, 1-butene, 3-methyl-1-butene, 4-methyl-1-pentene and 1-octene. Examples of the polyolefins are polyethylene, polypropylene, polybutene, poly(4-methyl-1-pentene), ethylene-propylene copolymer, ethylene-1-butene copolymer, propylene-1-butene copolymer and similar. The polyolefins can be subjected to drying in any form, for instance powders or pellets, but are usually used in the form of powder.

The drying of the polyolefins using the silo type through-flow drying apparatus is carried out by bringing the polyolefins into contact with an inert gas in counterflow and, in case of the multi-silo type through-flow drying apparatus, this is achieved by means of multiple counterflow contact in a vessel wherein a plurality of tanks is arranged and connected in series. The contact may be carried out in such a way that a fixed amount of polyolefins is charged into the apparatus beforehand and the polyolefins are subjected to contact with the inert gas under the above-mentioned conditions for a fixed period of time, and thereafter the polyolefins are taken out from the apparatus simultaneously (batch system), or else in such a way that the polyolefins are continuously charged into the apparatus from the upper part thereof and are continuously taken out from the lower part, all the while the polyolefins being continuously brought into

0006421

contact with the inert gas under the above-mentioned conditions (continuous system), or else the batch system and the continuous system are combined and are alternately.

The method and apparatus of the present invention are illustrated in more detail in the accompanying drawings.

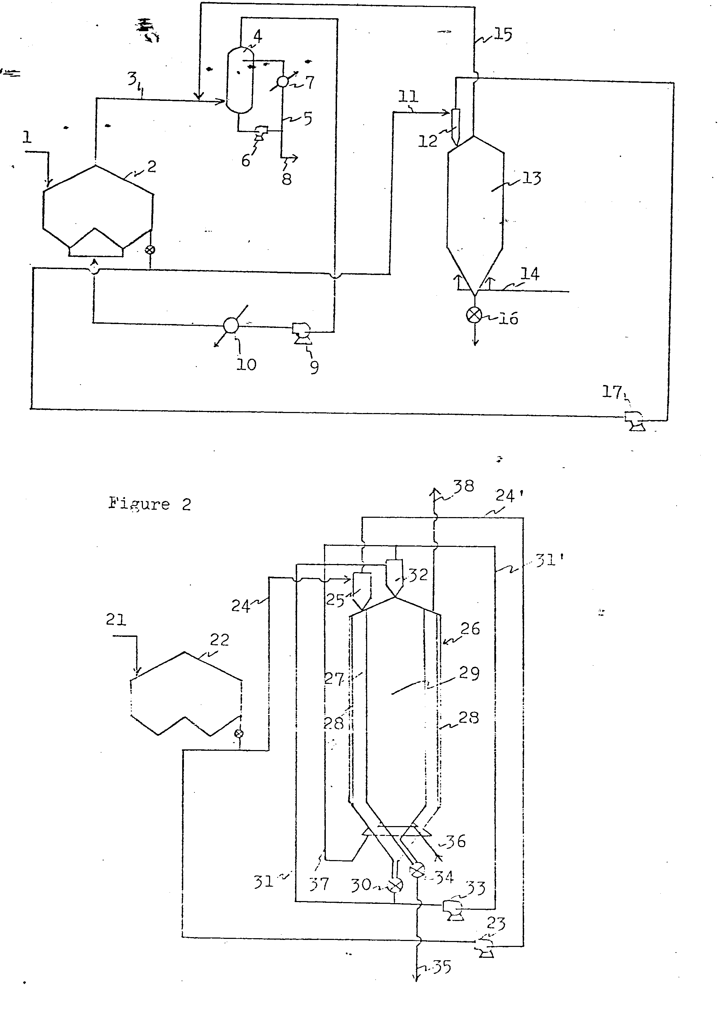

Figure 1 shows one embodiment of the drying system of the present invention which comprises a silo type through-flow drying apparatus and the first drying machine, and Figure 2 shows a multi-silo type through-flow drying apparatus.

In Figure 1 a cake of polyolefins, from which most of the hydrocarbons having 1 to 8 carbon atoms and/or alcohols having 1 to 8 carbon atoms have previously been removed by a centrifuging separator, is supplied to the first drying machine 2 (e.g. a box-type fluid bed dryer, flush dryer, or rotary dryer) through a line 1. Into the first drying machine 2 is supplied nitrogen gas which is compressed in a blower 9 and heated with a heater 10, and in the first drying machine 2 the polyolefins are dried until the concentration of the hydrocarbons and/or alcohol becomes lower than 2 % by weight. The nitrogen gas which contains the hydrocarbons and/or alcohols is sent to a cooling tower 4 through a line 3. In the cooling tower 4, liquid hydrocarbons are circulated through a line 5 by means of a pump 6 and are cooled with a cooler 7, whereby the nitrogen gas is cooled until the temperature of the nitrogen gas at the outlet of the cooling tower 4 reaches a prescribed temperature (e.g. 40 to 70°C). By means of this treatment in the cooling tower 4, the hydrocarbons and/or alcohols evaporated into the nitrogen gas are recovered and sent through a line 8 to a section for treating the recovered solvent (not shown in the figure).

The polyolefins taken out from the first drying machine 2 are sent to the upper part of a silo type through-flow drying apparatus 13, the outer wall of which is covered with a heat insulating material, through a line 11 and a cyclone 12 by means of blower 17. The polyolefins fall thanks to the gravity in the drying apparatus 13 while in contact with nitrogen gas in counterflow and are taken out from the lower part of the apparatus 13 via a valve 16.

An industrial nitrogen gas, containing substantially no hydrocarbon having 1 to 8 carbon atoms and/or no alcohol having 1 to 8 carbon atoms, is fed into the silo type through-flow drying apparatus 13 from the lower part thereof via a line 14 and rises in the apparatus while in contact with the polyolefins in counterflow, is taken out from the upper part thereof and sent to the cooling tower 4 through a line 15.

Instead of a single tank as shown in Figure 1, a multi-silo type through-flow drying apparatus wherein two or more tanks are arranged and connected in series may preferably be used, as shown in Figure 2.

In other words, as shown in Figure 2, a cake of polyolefins pretreated as in Figure 1 is fed into a first drying machine 22 through a line 21 and is treated in the same way. The polyolefins taken out from the first drying machine 22 are fed into an outside tank 27 of a double structural, silo type through-flow drying apparatus 26 through a line 24 and a cyclone 25 by means of a blower 23. The outer wall of the drying apparatus 26 is covered with a heat insulating material 28. The polyolefins passed from the upper part of the outer tank 27 descend owing to the gravity therein while in contact with nitrogen gas in counterflow, and are taken out from the lower part through a rotary valve 30, and then the polyolefins are fed into the inner tank 29 of the double structural, silo type through-flow drying apparatus 26 through a line 31 and a cyclone 32 by means of a blower 33. The polyolefins passed from the upper part of the inner tank 29 descend owing to gravity while in contact with nitrogen gas in counterflow and are taken out from the lower part through a valve 34 and a line 35. An industrial nitrogen gas, containing virtually no hydrocarbon having 1 to 8 carbon atoms and/or no alcohol having 1 to 8 carbon atoms, is fed into the inner tank 29 from the lower part thereof through a line 36, rises therein while in contact with the polyolefins in counterflow, and is taken out from the upper part. Part of the nitrogen gas is circulated through lines 31'-31 by means of the blower 33, and the remaining nitrogen gas is fed into the outer tank 27 from the lower part thereof through a line 37 and rises therein while in contact with the polyolefins in counterflow, and is taken out from the upper part. Part of the nitrogen gas taken out from the upper part of the outer tank 27 is circulated through lines 24'-24 by means of a blower 23 and the remaining nitrogen gas is passed to a device for treating the nitrogen gas (not shown in the figure) through a line 38.

The present invention is characterized as follows:

(1) Firstly, the drying method of the present invention produces a saving in energy in comparison with conventional methods and can, moreover, achieve a high degree of drying which could not be achieved by the conventional drying methods. In other words, according to the conventional two-step drying technique a large amount of an inert gas is required as a drying medium in the fluid bed dryer used in the second step, and hence it is essential to re-use the drying medium from the standpoint of minimizing cost. In order to re-use the drying medium the dew point of the hydrocarbons and/or alcohols in the inert gas must be sufficiently lowered and thereafter the gas must be heated again, thus entailing great energy consumption by the repeated cooling and re-heating.

Moreover, it is impossible to keep the dew point below the dew point (-40°C) of the industrial nitrogen gas in the process of polyolefin production, with the result that it is impossible to dry sufficiently until the total concentration of the hydrocarbons and/or alcohols in the polyolefins reaches a satisfactorily low level. Besides, where an agitating drying apparatus is used instead of the second step or as the third step, forcible agitation of the polyolefins is required, and this entails great energy outlay. In contrast to these conventional methods, the method of the present invention does not require this forcible diffusion of the polyolefins and, what is more, only a small amount of an inert gas needs to be used as the drying medium and it is not necessary to re-cycle this gas. Thus, use of the silo type through-flow drying apparatus as the second drying machine results in a considerable saving in energy in the present invention.

(2) When the silo type through-flow drying apparatus is used in the third step following the conventional two-step drying method, or when a multi-silo type through-flow drying apparatus is used as the drying machine in the later step, the total concentration of hydrocarbons and/or alcohols in the polyolefins can satisfactorily be reduced to a far lower level.

(3) When a silo type through-flow drying apparatus provided with a heat insulating device is used, the temperature of the polyolefins can be better regulated than when a conventional silo is used, resulting in a partial saving in the energy required in the step of pelletizing the polyolefins.

(4) When a multi-silo type through-flow drying apparatus is used, the polyolefins are dried by bringing them into contact with an inert gas in counterflow in multiple tanks connected in series with the result that the amount of inert gas required per unit amount of polyolefins to be dried can be decreased.

(5) In the case of the multi-silo type through-flow drying apparatus, the heat insulating material is provided only on the outermost wall, resulting also in a saving in costs for heat insulation with, furthermore, excellent heat insulating effect and also drying effect.

(6) In the case of the multi-silo type through-flow drying apparatus, the ratio of the height of tank to the sectional area can be increased in comparison with a single tank type apparatus, so that the polyolefins can be uniformly dried without undesirable biassed flow of the inert gas within the tanks.

The present invention is illustrated by the following examples but is not limited thereto.

In the examples the following polyolefins, apparatuses and inert gas are used.

(A)  Polyolefins to be dried:
Cakes of polyolefins containing heptanes which have the properties shown in the following Table 1.

Q006421

Table 1

| Name | Abbre-viation | $[\eta]^{tetralin}_{135°C}$ *1 (dl/g) | Content*2 of heptanes (% by weight) | Content*3 of ethylene (% by weight) |
|---|---|---|---|---|
| Propylene homopolymer | HPP | 1.63 | 29 | 0 |
| Propylene-ethylene copolymer | RPP | 1.85 | 35 | 3.3 |
| Ethylene homopolymer | HPE | 0.85 | 30 | 100 |

[Remarks]: *1) Intrinsic viscosity which is measured in tetralin at 135°C.

*2) The content of heptanes is calculated on the wet basis by means of the following equation:

$$\text{Content of heptanes} = \frac{\text{Heptanes}}{\text{Heptanes} + \text{Polyolefins}} \times 100$$

The heptanes consist mainly of n-heptane but contain other components as shown below.

| | | |
|---|---|---|
| n-Heptane | 55 % by weight | |
| Methylcyclohexane | 18 % | " |
| Cyclohexane | 15 % | " |
| Methylhexane | 4 % | " |
| Toluene | 2 % | " |
| Benzene | 1 % | " |
| Isopropyl alcohol | 1 % | " |
| n-Butyl alcohol | 2 % | " |
| Other components | 2 % | " |

*3) The content of ethylene is measured on the basis of the absorption at 736 $cm^{-1}$ and 722 $cm^{-1}$ in an in-

fra-red absorption spectrum on a sheet formed by heat pressing .

(B)   Silo type through-flow drying apparatus:

B-1) Single tank, silo type through-flow drying apparatus (abbreviation:SSD)

This has the appearance of a cylindrical storage vessel with a conical substructure, internal diameter of the cylindrical part of 3.8 m$^\emptyset$, height of the cylindrical part of 10 m, height of the conical substructure of 4 m, is provided with glass-wool (heat insulating material) to a thickness of 10 cm on the outer surface thereof, and is further provided with a nitrogen gas-introducing device at the conical substructural part.

B-2) Double structural, silo type through-flow drying apparatus (abbreviation:DSD)

This has the appearance of a cylindrical storage vessel with a conical substructure as shown in Figure 2, said outer tank 27 having an internal diameter of 3.8m$^\emptyset$ at the cylindrical part, a height of 10 m at the cylindrical part and a height of 4 m at the conical substructural part, said inner tank 29 being circularly concentric with the outer tank 27 and having an inner diameter of 2.7 m$^\emptyset$ at the cylindrical part, a height of 10 m at the cylindrical part and a height of 2.8 m at the conical substructural part, and said outer wall being provided with glass-wool (a heat insulating material) to a thickness of 10 cm.

(C) An inert gas:
An industrial nitrogen gas having a dew point of moisture and that of heptane of less than -60°C in both cases, and being introduced from the conical substructural part into the apparatus.

Examples 1 to 5

In the flow chart as shown in Figure 1, a one-stage fluid bed dryer was used as the first drying machine and SSD as the second drying machine. After commencement of operation, polyolefin powders were retained in an amount corresponding to the retention amount shown in the following Table 2, and subsequently polyolefin powders were introduced into the apparatus from the upper part of SSD and were taken out from the lower part of SSD in the introductory and removal amounts (ton/hour) shown in Table 2, the polyolefin powders being all the while in contact with nitrogen gas in counterflow under the conditions shown in Table 2. Nine hours after commencement of operation a sample was taken out from a sampling aperture and the concentration of heptanes remaining in the gaseous phase and in the powders was measured. The results are shown in Table 2.

Table 2

| | | Example 1 | Example 2 | Example 3 | Example 4 | Example 5 |
|---|---|---|---|---|---|---|
| Polyolefin powders to be dried | | HPP | HPP | HPP | RPP | HPE |
| First drying machine (one-stage type) | Temperature of powders at outlet (°C) | 125 | 125 | 125 | 120 | 115 |
| | Content of heptanes in powders at outlet (ppm by weight) | 7000 | 7000 | 7000 | 8000 | 10000 |
| Second drying machine (SSD) | Retention amount of powders (ton) | 25 | 25 | 25 | 30 | 28 |
| | Retention time of powders (hr) | 5 | 5 | 5 | 6 | 7 |
| | Introductory and removal amounts of powders (ton/hr) | 5 | 5 | 5 | 5 | 4 |
| | Introductory amount of nitrogen gas ($Nm^3$/hr) | 150 | 600 | 150 | 200 | 200 |
| | Temperature of nitrogen gas (°C) | 25 | 120 | 10 | 25 | 25 |
| | Content of heptanes in gaseous phase at outlet (ppm by volume) | 3300 | 1500 | 6100 | 6000 | 5900 |
| | Temperature of powders at outlet (°C) | 72 | 110 | 60 | 102 | 90 |
| | Content of heptanes in powders at outlet (ppm by weight) | 620 | 167 | 1450 | 810 | 930 |

Examples 6 to 12

In the flow chart similar to that shown in Figure 1, a two-stage fluid bed dryer was used as the first drying machine and SSD as the second drying machine. In the same manner as described in Examples 1 to 5, polyolefin powders were dried under the conditions shown in Table 3. The results are shown in Table 3.

Examples 13 and 14

Polyolefin powders were dried under the conditions as shown in Table 4 in the same manner as described in Examples 1 to 5, except that DSD was used instead of SSD as the second drying machine. The results are shown in Table 4.

Example 15

Polyolefin powders were dried under the conditions as shown in Table 5 in the same manner as described in Examples 6 to 12, except that DSD was used instead of SSD as the second drying machine. The results are shown in Table 5.

Table 3

| | | Example 6 | Example 7 | Example 8 | Example 9 | Example 10 | Example 11 | Example 12 |
|---|---|---|---|---|---|---|---|---|
| Polyolefin powders to be dried | | HPP | HPP | HPP | HPP | HPP | RPP | HPE |
| First Drying machine (two-stage type) | Temperature of powders at outlet (°C) | 125 | 125 | 125 | 125 | 125 | 120 | 115 |
| | Content of heptanes in powders at outlet (ppm by weight) | 390 | 460 | 1500 | 1500 | 1500 | 800 | 700 |
| Second drying machine (SSD) | Retention amount of powders (ton) | 30 | 35 | 35 | 23 | 35 | 35 | 35 |
| | Retention time of powders (hr) | 7.9 | 7 | 7 | 4.6 | 7 | 7 | 7 |
| | Introductory and removal amounts of powders (ton/hr) | 3.8 | 5 | 5 | 5 | 5 | 5 | 5 |
| | Introductory amount of nitrogen gas ($Nm^3$/hr) | 540 | 320 | 90 | 150 | 150 | 320 | 320 |
| | Temperature of nitrogen gas (°C) | 25 | 25 | 25 | 25 | 10 | 25 | 25 |
| | Content of heptanes in gaseous phase at outlet (ppm by volume) | 200 | 460 | 3800 | 2800 | 1800 | 590 | 480 |
| | Temperature of powders at outlet (°C) | 70 | 100 | 105 | 108 | 68 | 78 | 75 |
| | Content of heptanes in powders at outlet (ppm by weight) | 29 | 50 | 480 | 430 | 335 | 88 | 73 |

## Table 4

| | | Tank No | Example 13 | Example 14 |
|---|---|---|---|---|
| Polyolefin powders to be dried | | | HPP | RPP |
| First drying machine (one-stage type) | Temperature of powders at outlet (°C) | | 125 | 120 |
| | Content of heptanes in powders at outlet (ppm by weight) | | 7000 | 8000 |
| Second drying machine (DSD) | Retention amount of powders (ton) | 27<br>29 | 13<br>12 | 13<br>12 |
| | Retention time of powders (hr) | 27<br>29 | 5.2<br>4.8 | 5.2<br>4.8 |
| | Introductory and removal amounts of powders (ton/hr) | 27,29 | 2.5 | 2.5 |
| | Introductory amount of nitrogen gas $(Nm^3/hr)$ | 27,29 | 280 | 280 |
| | Temperature of nitrogen gas (°C) | 29 | 25 | 25 |
| | Content of heptanes in gaseous phase of outlet (ppm by volume) | 27<br>29 | 13000<br>540 | 15000<br>680 |
| | Temperature of powders at outlet (°C) | 29 | 90 | 85 |
| | Content of heptanes in powders at outlet (ppm by weight) | 29 | 68 | 93 |

Table 5

|  |  | Tank No | Example 15 |
|---|---|---|---|
| Polyolefin powders to be dried |  |  | HPP |
| First drying machine (two-stage type) | Temperature of powders at outlet (°C) |  | 125 |
| | Content of heptanes in powders at outlet (ppm by weight) |  | 460 |
| Second drying machine (DSD) | Retention amount of powders (ton) | 27<br>29 | 18<br>17 |
| | Retention time of powders (hr) | 27<br>29 | 3.6<br>3.4 |
| | Introductory and removal amounts of powders (ton/hr) | 27,29 | 5 |
| | Introductory amount of nitrogen gas ($Nm^3$/hr) | 27,29 | 260 |
| | Temperature of nitrogen gas (°C) | 29 | 25 |
| | Content of heptanes in gaseous phase of outlet (ppm by volume) | 27<br>29 | 1900<br>128 |
| | Temperature of powders at outlet (°C) | 29 | 102 |
| | Content of heptanes in powders at outlet (ppm by weight) | 29 | 12 |

- 1 -

What is claimed is:

1. A method for drying polyolefins which comprises bringing polyolefins having a content of at least one of hydrocarbons having 1 to 8 carbon atoms and alcohols having 1 to 8 carbon atoms of 100 ppm by weight to 2 % by weight/$\overline{\text{with}}$ an inert gas $\overset{\text{into contact}/}{}$ in counterflow in a silo type through-flow drying apparatus.

2. A method for drying polyolefins, which comprises the steps of subjecting polyolefins containing at least one of hydrocarbons having 1 to 8 carbon atoms and alcohols having 1 to 8 carbon atoms to centrifugation in order to remove most of the hydrocarbons and alcohols, drying the polyolefins thus treated in a drying machine until the total content of the hydrocarbons and alcohols reaches in the range of 100 ppm by weight to 2 % by weight, and bringing the resulting polyolefins/$\overline{\text{with}}$ an inert gas $\overset{\text{into contact}/}{}$ in counterflow in a silo type through-flow drying apparatus.

3. A method for drying polyolefins according to claim 1 or 2, wherein said silo type through-flow drying apparatus consists of two or more single tank silo type through-flow drying vessels which are connected in series.

4. A method for drying polyolefins according to claim 1 or 2, wherein said silo type through-flow drying apparatus is a multi-silo type through-flow drying apparatus.

5. A method for drying polyolefins according to any one of claims 1 to 4, wherein said inert gas is nitrogen gas having a dew point of lower than -20°C.

6. A method for drying polyolefins according to any one of claims 1 to 5, wherein the inert gas is used at a temperature of 20 to 130°C and in an amount of 20 $Nm^3$ or more per ton of the polyolefins.

7. A method for drying polyolefins according to any one of claims 1 to 6, wherein the polyolefins charged into the silo type through-flow drying apparatus have a temperature of 50 to 130°C.

8. A method for drying polyolefins according to any one of claims 1 to 7, wherein the polyolefins are brought into contact / with the inert gas in counterflow in the silo type through-flow drying apparatus by keeping the temperature of the polyolefins at 50 to 130°C under the condition that the total concentration of the hydrocarbons and/or alcohols in the gaseous phase: Cg (ppm by volume) satisfies the following formula:

$$Cg \leqq 9 \times 10^2 \cdot Cs^{0.91} \cdot e^{-3100/RT}$$

wherein Cs is the total concentration of the hydrocarbons having 1 to 3 carbon atoms and/or alcohols having 1 to 8 carbon atoms which are contained in the polyolefins and are to be removed (ppm by weight), T is an absolute temperature (°K), $e$ is base of natural logarithm, and R is a gas constant.

0006421

1.987 (Cal/deg.mol), for a period of  0.5 to 20 hours.

9.  A multi-silo type through-flow drying apparatus for drying polyolefins comprising two or more tanks having the same or similar shape and dimensions in a single storage vessel.

10.  A multi-silo type through-flow drying apparatus according to claim 9, wherein the tanks are a cylindrical storage vessel having a conical substructure which has a ratio of      height to      inner diameter of 1.0 or more.

Figure 1

.0006421

Figure 2